Europäisches Patentamt

European Patent Office

Office européen des brevets

(19)

(11) Veröffentlichungsnummer : **0 118 098**
**B1**

(12) **EUROPÄISCHE PATENTSCHRIFT**

(45) Veröffentlichungstag der Patentschrift :
30.12.86

(51) Int. Cl.⁴ : **F 16 H   1/14**

(21) Anmeidenummer : 84102109.0

(22) Anmeldetag : 29.02.84

(54) **Kegelradanordnung.**

(30) Priorität : 02.03.83 US 471410

(43) Veröffentlichungstag der Anmeldung :
12.09.84 Patentblatt 84/37

(45) Bekanntmachung des Hinweises auf die Patenterteilung : 30.12.86 Patentblatt 86/52

(84) Benannte Vertragsstaaten :
DE FR GB

(56) Entgegenhaltungen :
CH-A-   325 588
CH-A-   448 660
DE-B- 1 018 284
DE-B- 1 046 433
DE-B- 1 051 596
DE-B- 2 007 849
DE-C-   902 699
GB-A- 1 031 854
GB-A- 1 237 214
US-A- 2 869 384

(73) Patentinhaber : **DEERE & COMPANY**
**1 John Deere Road**
**Moline Illinois 61265 (US)**

(72) Erfinder : **Lohr, Thomas Herbert**
**906 Rue De Senonches**
**Horicon Wisconsin 53032 (US)**

(74) Vertreter : **Feldmann, Bernhard**
**DEERE & COMPANY European Office, Patent Depart-**
**ment Steubenstrasse 36-42 Postfach 503**
**D-6800 Mannheim 1 (DE)**

## Beschreibung

Die Erfindung bezieht sich auf eine Kegelradanordnung in einem mindestens eine erste und eine zweite Öffnung sowie einen ersten Lagersitz für ein erstes Lager aufweisenden Gehäuse, wobei die erste Öffnung auf der dem Lagersitz gegenüberliegenden Gehäuseseite angeordnet, zu dem Lagersitz ausgerichtet und durch einen ersten Deckel verschließbar ist, der ein zweites Lager für eine erste Welle aufnimmt, die durch den Deckel geführt, in dem ersten Lager gelagert ist und ein erstes Kegelrad drehfest aufnimmt, das mit einem drehfest auf einer zweiten Welle angeordneten zweiten Kegelrad kämmt.

Derartige Kegelradanordnungen sind in der Regel in einem geschlossenen Gehäuse angeordnet und laufen in einem Ölbad. Verschlußkappen sind vorgesehen, um den Zugang zu dem Inneren des Gehäuse zwecks Montage oder Reparatur zu ermöglichen. Dabei gehören solche Kegelradanordnungen zu einem Gesamtsystem, wodurch die bei Reparaturen anfallenden Ausfallzeiten noch erhöht werden. Die Kegelradcharakteristika werden durch die Ausrichtung der Kegelräder und durch Leckölverluste beeinflußt. Öl kann dabei im Bereich von kompressiblen Dichtungen, die zwischen Gehäuse und Verschlußkappen vorgesehen sind und das mehr oder weniger feste Verspannen der Verschlußkappen ermöglichen, austreten. Sind die Dichtungen beschädigt, so kann zudem noch Feuchtigkeit und gegebenenfalls Wasser in das Gehäuse eintreten. Zudem sind dann auch nicht mehr die optimalen Eingriffsverhältnisse an den Kegelrädern gegeben, da diese dann in ihren Winkelstellungen Veränderungen erfahren.

Bei der bekannten auch die vorgenannten Nachteile aufweisenden Kegelradanordnung (DE-B-2 007 849), von der die Erfindung ausgeht, soll das Problem gelöst werden, ein schrägverzahntes Zahnrad auf einer keillosen Welle zu befestigen.

Demgegenüber wird die mit der Erfindung zu lösende Aufgabe darin gesehen, Vorkehrungen zu treffen, um die Kegelräder besser und dauerhaft zueinander auszurichten.

Diese Aufgabe ist gemäß der Erfindung dadurch gelöst worden, daß das erste Kegelrad über eine Scheibe gegen eine Stirnseite des ersten Lagers und die der Scheibe abgelegene Seite des ersten Kegelrades gegen einen Wellenabsatz der ersten Welle bzw. einen in die erste Welle eingesetzten Segerring anliegt, wobei zwischen dem zweiten Lager und einer Ringschulter des zugehörigen zweiten Lagersitzes ein Lastring vorgesehen ist und die dem Lastring abgelegene Seite des zweiten Lagers gegen einen zweiten Wellenabsatz der ersten Welle bzw. einen zweiten, in die erste Welle eingesetzten Segerring anliegt. Auf diese Weise wird eine Längsbewegung des ersten Kegelrades verhindert und seine definitive Lage mit Bezug auf das Gehäuse gewährleistet, weil durch die Zuordnung von Scheibe, Lastring und Segerringen bzw. Wellenabsätzen der ersten Welle unzulässige Toleranzen in Lagern und Lagersitzen leicht aufgefangen werden können und über den Lastring ein Druck derart ausgeübt wird, daß das erste Kegelrad eine festgelegte Position mit Bezug auf das Gehäuse und nicht mit Bezug auf die erste Welle einnimmt. Im Ganzen gesehen kann somit die optimale Lage mindestens eines Kegelrades ohne Beeinflussung durch kompressible Dichtungen positiv eingestellt werden. Dadurch werden Leckölverluste vermieden und die Kegelradanordnung ist weniger reparaturanfällig, so daß sie eine längere Lebensdauer aufweist.

Dadurch, daß zwischen dem ersten Deckel und dem Gehäuse eine weitere Scheibe anordbar ist, kann die Druckkraft des Lastrings variiert werden.

Weitere Einstellmöglichkeiten ergeben sich erfindungsgemäß dann, wenn ein zweiter Deckel lösbar in der zweiten Öffnung mit dem Gehäuse verbunden ist und eine sich längs erstreckende zylindrische Bohrung aufweist, in der ein drittes Lager angeordnet ist, wobei die zweite Welle sich durch das dritte Lager erstreckt und das an ihrem freien Ende angeordnete zweite Kegelrad einenends gegen das dritte Lager und anderenends gegen eine auf die zweite Welle aufschraubbare Drehmomentmutter über eine Scheibe anliegt, wobei auf der zweiten Welle zwischen dem dritten Lager und dem zweiten Kegelrad eine Scheibe vorgesehen ist.

In der Zeichnung sind zwei Ausführungsbeispiele der Erfindung, die nachfolgend näher beschrieben sind, dargestellt. Es zeigt :

Figur 1 ein Kegelradgetriebe im Schnitt und

Figur 2 eine weitere Ausführungsform für die Anordnung eines Kegelrades auf einer Welle.

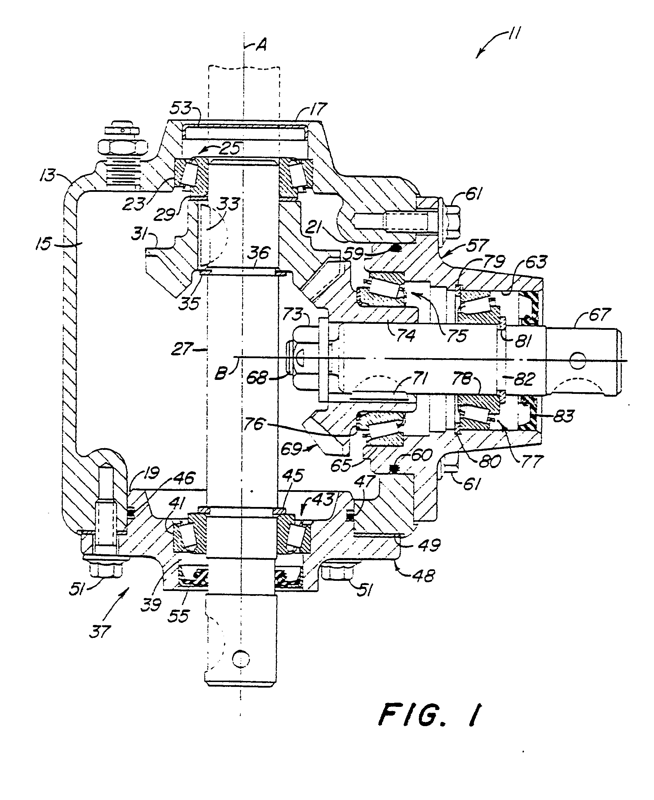

Das in Fig. 1 wiedergegebene Kegelradgetriebe 11 ist in einem Gehäuse 13 angeordnet, das mehrere kanalförmige Öffnungen 17, 19 und 21 aufweist. Dabei sind die Öffnungen 17 und 19 konzentrisch zu einer Mittellinie A in sich gegenüberliegenden Wänden des Gehäuses 13 und die Öffnung 21 in dem Gehäuse 13 derart eingearbeitet, daß ihre Mittellinie B senkrecht zu der Mittellinie A der Öffnungen 17 und 19 verläuft.

Im Bereich der Öffnung 17 ist ein Gehäuse 13 ein Lagersitz 23 vorgesehen, in den ein Lager 25 spielfrei eingepaßt ist. Durch die Öffnung 19 ist eine erste Welle 27 geführt, deren anderes Ende in dem Lager 25 gelagert ist. Die Welle 27 kann aber auch durch das Lager 25 hindurchgeführt werden, wie es in Fig. 1 in strichlierten Linien angedeutet ist. Braucht die Welle 27 nicht über das Lager 25 hinaus durch das Gehäuse 13 geführt zu werden, so kann die Öffnung 17 entsprechend anders ausgeführt werden, d. h. derart, daß sie lediglich den Lagersitz bildet.

Auf die erste Welle 27 ist eine Scheibe 29 aufgesteckt, die im Gehäuse 13 gegen das Lager 25 anliegt und der richtigen Einstellung eines ersten Kegelrades 31 dient, das auf der Welle 27 über einen Keil 33 gesichert ist und mit seinem einen Ende gegen die Scheibe 29 anliegt. Das andere Ende des Kegelrades 31 ist durch einen Segerring 35 gesichert, der in eine in die Welle 27 eingearbeitete Ringnut 36 einsetzbar ist, so daß das Kegelrad gegen Verschieben auf der Welle 27 gesichert ist. Durch diese Anordnung der Welle 27 und des Kegelrades 31 kann die Lage des Kegelrades 31 im Gehäuse 13 variiert werden.

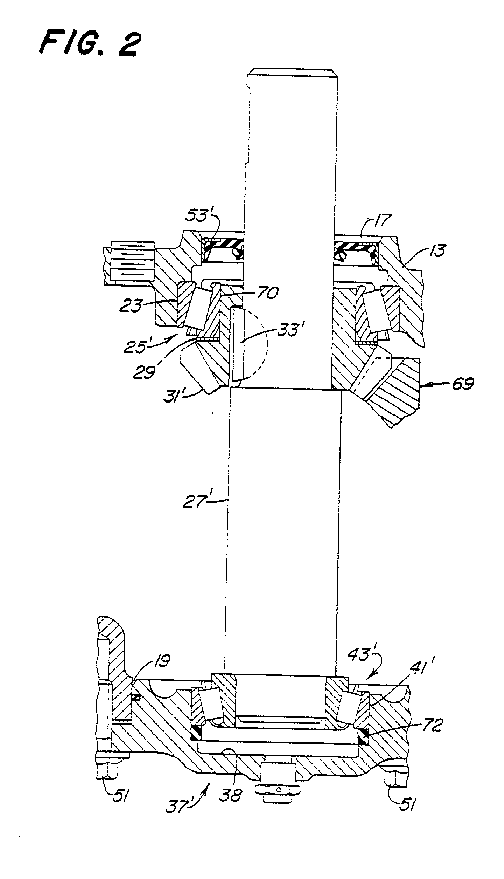

Die Öffnung 19, die einen Durchmesser aufweisen kann, der derart groß ist, daß das Kegelrad 31 hindurchgeführt werden kann, ist durch einen Deckel 37 verschließbar, der zum Durchtritt der Welle 27 eine Bohrung 39 aufweist. Dabei ist die Bohrung 39 so ausgebildet, daß sie einen Lagersitz 41 bildet, in dem ein Lager 43 gegen einen in der Figur 1 nicht gezeigten Lastring (72 in Fig. 2) anliegend spielfrei eingepaßt ist, das Lager 43 die Welle 27 drehbar aufnimmt. Über einen Segerring 45, der in eine Ringnut in der Welle 27 einsetzbar ist und gegen das Lager 43 anliegt, ist die Lage der Welle gegenüber dem Lager fixierbar.

Der Deckel 37 ist ferner noch mit einem umlaufenden Flanschteil 48 versehen, der über Schrauben 51 mit dem Gehäuse 13 verbindbar ist. Außerdem ist in den Deckel 37 im Bereich seiner Ringwand noch eine Ringnut 46 eingearbeitet, die zur Aufnahme eines Dichtrings 47 dient, der im eingebauten Zustand den Deckel 37 und das Gehäuse 13 im Bereich der Öffnung 19 abdichtet. Eine Metallscheibe 49 kann zwischen dem Flanschteil 48 und dem Gehäuse 13 vorgesehen werden. Über einen Dichtdeckel 53 ist die Öffnung 17 verschließbar und die Bohrung 39 durch einen Dichtdeckel 55, der aber die Welle 27 durchtreten läßt.

Auch die Öffnung 21 nimmt einen Deckel 57 auf, wobei der Bereich zwischen Gehäuse 13 und Deckel 57 durch einen Dichtring 59 abdichtbar ist, der in eine in den Deckel 57 eingearbeitete Ringnut 60 einsetzbar ist und gegen das Gehäuse im Bereich der Öffnung 21 anliegt. In dem Deckel 57 ist des weiteren eine kanalförmige Bohrung 63 mit einem ersten Lagersitz 65 vorgesehen, durch die eine zweite Welle 67 geführt ist, deren im Gehäuse 13 endendes Ende als Gewindeende 68 ausgebildet ist und die im Gehäuse 13 über einen Keil 71 ein zweites Kegelrad 69 aufnimmt. Auf das Gewindeende 68 der Welle 67 ist eine Drehmomentmutter 73 aufschraubbar, die über eine Unterlegscheibe gegen das zweite Kegelrad 69 anliegt. Dieses ist mit einem Nabenteil 74 ausgerüstet, der in ein Lager 75 spielfrei eingepaßt ist, das wiederum in dem Lagersitz 65 aufgenommen ist. Zwischen Lager 75 und Kegelrad 69 kann eine auf den Nabenteil 74 aufgeschobene Scheibe 76 vorgesehen sein, über die etwaiges Spiel kompensierbar ist. Mit Abstand zu dem Lager 75 jedoch noch im Gehäuse 13 ist auf der Welle 67 in ihrem Bereich 78 ein weiteres Lager 77 zur drehbaren Aufnahme der Welle 67 vorgesehen. Das Lager 77 ist ebenfalls in der Bohrung 63 des Deckels 57 eingepaßt und wird einenends durch einen Segerring 79, der in eine Ringnut 80 in der Bohrung 63 einsetzbar ist, gegen eine mit Bezug auf Fig. 1 nach links gerichtete Bewegung gesichert und anderenends gegen eine mit Bezug auf Fig. 1 nach rechts gerichtete Bewegung durch einen Segering 81, der in eine in die Welle 67 eingearbeitete Ringnut 82 einsetzbar ist. Die Bohrung 63 ist durch einen Dichtdeckel 83, der eine Öffnung zum Durchtritt der Welle 67 aufweist, verschließbar.

Die Öffnung 21 weist einen Innendurchmesser auf, der groß genug ist, daß das zweite Kegelrad 69 zusammen mit der Welle 67 in das Gehäuse 13 eingeführt oder aus dem Gehäuse herausgezogen werden kann. Auch der dabei mitbewegbare Deckel 57 ist mit einem umlaufenden Flanschteil versehen und kann über Schrauben 61 mit dem Gehäuse verbunden sein.

Durch die vorbeschriebenen Maßnahmen können die beiden Kegelräder 31 und 69 immer so eingestellt werden, daß sie unter optimalen Bedingungen miteinander kämmen.

Die in Fig. 2 dargestellte Ausführungsform für die Anordnung des ersten Kegelrades auf der zugehörigen Welle weist ein Kegelrad 31' auf, das über einen Keil 33' auf einer Welle 27' drehfest angeordnet ist. Hierbei ist das Kegelrad 31' mit einem Nabenteil 70 versehen, auf dem zur drehbaren Anordnung der Welle 27' ein Lager 25' aufsitzt, das mit seinem Außenring in das Gehäuse 13 im Bereich der Öffnung 17 eingepaßt ist. Im Bereich des Kegelrades 31' ist die Welle 27' abgedreht, so daß eine Schulter entsteht, gegen die das Kegelrad 31' mit seiner dem Lager 25' abgelegenen Stirnseite anliegt. Gegenüber dem Deckel 37 bei der Ausführung nach Fig. 1 ist bei dieser Ausführungsform der Deckel 37' mit einer einenends verschlossenen Ausdrehung 38 versehen, die zur Aufnahme eines Lagers 43' mit einem Lagersitz 41' versehen ist, wobei zwischen dem Lager 43' und dem geschlossenen Stirnende der Ausdrehung 38 ein Lastring 72 vorgesehen ist. Das Lager 43' wiederum sitzt mit seinem Innenring auf der Welle 27' auf, die in diesem Bereich ebenfalls entsprechend abgedreht sein kann, so daß eine Schulter entsteht, gegen die das Lager anliegt. Durch die Schultern kann auf die bei der Ausführung nach Fig. 1 vorgesehenen Ringnuten und Segerringe verzichtet werden. Aber durch einfaches Hinzufügen von Scheiben zwischen Kegelrad 31' bzw. dem Lager 43' und den zugehörigen Schultern kann die optimale Lage des Kegelrades 31' eingestellt werden, wobei die Welle 27' verstärkt ausgebildet sein kann.

Neben der optimalen Einstellung der Kegelräder erlauben die vorbeschriebenen Ausführungsformen einen leichten Einbau und eine bedienungsfreundliche Wartung. Bei eventuell erforderlich werdenden Reparaturen brauchen lediglich die entsprechenden Deckel abgeschraubt zu werden, und die Wellen und Lager mit Kegelrädern lassen sich mit den Deckeln als Einheit entfernen. Dichtungsmanschetten im Bereich der Lager sind nicht mehr erforderlich.

**Patentansprüche**

1. Kegelradanordnung in einem mindestens eine erste und eine zweite Öffnung (19, 21) sowie einen ersten Lagersitz (23) für ein erstes Lager (25) aufweisenden Gehäuse (13), wobei die erste Öffnung (19) auf der dem Lagersitz (23) gegenüberliegenden Gehäuseseite angeordnet, zu dem Lagersitz (23) ausgerichtet und durch einen ersten Deckel (37) verschließbar ist, der ein zweites Lager (43) für eine erste Welle (27) aufnimmt, die durch den Deckel (37) geführt, in dem ersten Lager (25) gelagert ist und ein erstes Kegelrad (31) drehfest aufnimmt, das mit einem drehfest auf einer zweiten Welle (67) angeordneten zweiten Kegelrad (69) kämmt, dadurch gekennzeichnet, daß das erste Kegelrad (31) über eine Scheibe (29) gegen eine Stirnseite des ersten Lagers (25) und die der Scheibe (29) abgelegene Seite des ersten Kegelrades (31) gegen einen Wellenabsatz der ersten Welle (27) bzw. einen in die erste Welle (27) eingesetzten Segerring (35) anliegt, wobei zwischen dem zweiten Lager (43) und einer Ringschulter des zugehörigen zweiten Lagersitzes (41) ein Lastring (72) vorgesehen ist und die dem Lastring (72) abgelegene Seite des zweiten Lagers (43) gegen einen zweiten Wellenabsatz der erste Welle (27) bzw. einen zweiten in die erste Welle (27) eingesetzten Segerring (45) anliegt.

2. Kegelradanordnung nach Anspruch 1, dadurch gekennzeichnet, daß zwischen dem ersten Deckel (37) und dem Gehäuse (13) eine weitere Scheibe (49) anordbar ist.

3. Kegelradanordnung nach Anspruch 1, dadurch gekennzeichnet, daß ein zweiter Deckel (57) lösbar in der zweiten Öffnung (21) mit dem Gehäuse (13) verbunden ist und eine sich längs erstreckende zylindrische Bohrung (63) aufweist, in der ein drittes Lager (75, 77) angeordnet ist, wobei die zweite Welle (67) sich durch das dritte Lager erstreckt und das an ihrem freien Ende angeordnete zweite Kegelrad (69) einenends gegen das dritte Lager und anderenends gegen eine auf die zweite Welle (67) aufschraubbare Drehmomentmutter (73) über eine Scheibe anliegt.

4. Kegelradanordnung nach Anspruch 3, dadurch gekennzeichnet, daß der zweite Deckel (57) eine Ringnut (60) zur Aufnahme eines Ringes (59) aufweist, der im Bereich der zweiten Öffnung (21) gegen das Gehäuse (13) anliegt.

5. Kegelradanordnung nach einem der Ansprüche 3 und 4, dadurch gekennzeichnet, daß auf der zweiten Welle (67) zwischen dem dritten Lager und dem zweiten Kegelrad (69) eine Scheibe (76) vorgesehen ist.

**Claims**

1. Bevel gear arrangement in a case (13) having at least a first and a second opening (19, 21) and a first bearing seat (23) for a first bearing (25), the first opening (19) being arranged on that side of the case which is opposite the bearing seat (23), being aligned with respect to the bearing seat (23) and being closable by a first cover (37) accommodating a second bearing (43) for a first shaft (27) which is passed through the cover (37), is mounted in the first bearing (25) and receives a first bevel gear (31) rotationally fast therewith which meshes with a second bevel gear (69) arranged rotationally fast therewith on a second shaft (67), characterised in that the first bevel gear (31) bears via a gasket (29) against one end face of the first bearing (25) and that side of the first bevel gear (31) which is remote from the gasket (29) bears against a step in the first shaft (27) or against a Seger ring (35) inserted in the first shaft (27), a load ring (72) being provided between the second bearing (43) and an annular shoulder of the associated second bearing seat (41) and that side of the second bearing (43) which is remote from the load ring (72) bearing against a second step in the first shaft (27) or against a second Seger ring (45) inserted in the first shaft (27).

2. Bevel gear arrangement according to claim 1, characterised in that another gasket (49) can be arranged between the first cover (37) and the case (13).

3. Bevel gear arrangement according to claim 1, characterised in that a second cover (57) is removably connected to the case (13) in the second opening (21) and has a longitudinally extending cylindrical bore (63) in which a third bearing (75, 77) is arranged, the second shaft (67) extending through the third bearing and the second bevel gear (69) arranged at its free end bearing at one end against the third bearing and at the other end, via a washer, against a torque nut (73) which can be screwed onto the second shaft (67).

4. Bevel gear arrangement according to claim 3, characterised in that the second cover (57) has an annular groove (60) for receiving a ring (59) which bears against the case (13) in the region of the second opening (21).

5. Bevel gear arrangement according to either one of claims 3 and 4, characterised in that a gasket (76) is provided on the second shaft (67) between the third bearing and the second bevel gear (69).

**Revendications**

1. Engrenage conique placé dans un carter (13) comportant au moins une première ouverture (19) et une seconde ouverture (21), ainsi qu'un premier siège de palier (23) pour un premier palier (25), la première ouverture (19), située du côté du carter opposé au siège de palier (23), étant orientée par rapport au siège de palier (23) et pouvant être obturée par un premier couvercle (37) qui loge un second palier (43) pour un premier arbre (27) qui passe à travers le couvercle (37), est placé dans le premier palier (25) et sur lequel est calé de façon à en être solidaire en rotation un premier pignon conique (31) qui engrène avec un second pignon conique (69) calé de façon à en être solidaire en rotation sur un second arbre (67), caractérisé en ce que le premier pignon conique (31) s'appuie par l'intermédiaire d'une rondelle d'appui (29) contre une face frontale du premier palier (25) et la face du premier pignon conique (31) opposée à la rondelle (29) contre un gradin du premier arbre (27) ou un anneau Seger (35) inséré dans le premier arbre (27), un anneau de charge (72) étant prévu entre le second palier (43) et un épaulement annulaire du second siège de palier (41) correspondant et la face du second palier (43) opposée à l'anneau de charge (72) s'appuyant contre un second gradin du premier arbre (27) ou un second anneau Seger (45) inséré dans le premier arbre (27).

2. Engrenage conique suivant la revendication 1, caractérisé en ce qu'une autre rondelle d'appui (49) peut être placée entre le premier couvercle (37) et le carter (13).

3. Engrenage conique suivant la revendication 1, caractérisé en ce qu'un second couvercle (57) est relié de façon amovible au carter (13) dans la seconde ouverture (21) et comporte un alésage cylindrique (63) dirigé longitudinalement dans lequel est placé un troisième palier (75, 77), le second arbre (67) s'étendant à travers le troisième palier et le second pignon conique (69) placé à son extrémité libre s'appuyant par une extrémité contre le troisième palier et, par son autre extrémité, contre un écrou dynamométrique (73) pouvant être vissé sur le second arbre (67) par l'intermédiaire d'une rondelle.

4. Engrenage conique suivant la revendication 3, caractérisé en ce que le second couvercle (57) comporte une rainure annulaire (60) pour recevoir un joint annulaire (59) qui s'appuie contre le carter (13) dans la zone de la seconde ouverture (21).

5. Engrenage conique suivant l'une des revendications 3 et 4, caractérisé en ce qu'il est prévu une rondelle d'appui (76) sur le second arbre (67) entre le troisième palier et le second pignon conique (69).

FIG. 1

# FIG. 2